# EUROPÄISCHE PATENTSCHRIFT

(11) **EP 2 796 654 B1**
(45) Veröffentlichungstag und Bekanntmachung des Hinweises auf die Patenterteilung: **31.07.2019**
(21) Anmeldenummer: 14002241.9
(22) Anmeldetag: 22.10.2012
(51) Int. Cl.: E06B 3/673, B65G 49/06, A47F 7/00, B25J 15/06, B65G 57/00

(54) **Verfahren zum Zwischenspeichern von Isolierglas-Rohlingen**
Method for intermediate storage of insulating glass blanks
Procédé de stockage intermédiaire d'ébauches en verre isolant

(30) Priorität: 20.10.2011 AT 15412011
(43) Veröffentlichungstag der Anmeldung: 29.10.2014
(62) Teilanmeldung aus: 12787627.4
(73) Patentinhaber: LISEC Austria GmbH, 3353 Seitenstetten (AT)
(72) Erfinder: Mader, Leopold, 3364 Neuhofen/Ybbs (AT)
(74) Vertreter: Beer & Partner Patentanwälte KG

(56) Entgegenhaltungen:
- EP-A2- 1 319 634
- DE-A1- 3 408 688
- DE-A1- 10 210 558
- US-A- 5 906 282

## Beschreibung

Die Erfindung betrifft ein Verfahren zum Zwischenspeichern von Isolierglas-Rohlingen bei dem versiegelte Isolierglas-Rohlinge aus einer Versiegelungsstation entnommen und in einen Zwischenspeicher eingestellt werden.

Es ist bekannt und beim Herstellen von Isolierglas üblich, die zwischen den Glasscheiben außerhalb der Abstandhalter liegende, nach außen offene Randfuge von Isolierglas-Rohlingen, bestehend aus wenigstens zwei Glasscheiben mit dazwischen gefügtem Abstandhalter, der mit den Glasscheiben verbunden ist, mit Versiegelungsmasse zu füllen, um den endgültigen Verbund der Glasscheiben des Isolierglases zu erzielen. Für das Versiegeln von Isolierglas-Rohlingen sind verschiedentlich Vorschläge betreffend Verfahren und Vorrichtung gemacht worden. Insbesondere ist es problematisch, die Isolierglas-Rohlinge während und nach dem Versiegeln zu transportieren, da Versiegelungsmasse, so lange sie nicht ausgehärtet ist, sehr klebrig ist und Transportmittel, die am (unteren) Rand der Isolierglas-Rohlinge angreifen, verschmutzt. Um dieses Problem zu lösen, sind verschiedene Vorschläge für spezielle Ausbildungen von Fördermitteln gemacht worden (vgl. z.B. AT 384 596 B, EP 0 122 405 A, EP 0 857 848 A und DE 34 00 031 C).

Die DE 102 10 558 A1 betrifft Fächerpaletten zum Sortieren, Transportieren, Bereitstellen von Isolierglas in vertikaler Ausrichtung. Zum Beladen dieser Fächerpaletten ist eine Beladevorrichtung vorgesehen. In Absatz [0007] der DE 102 10 558 A1 ist erwähnt, dass Isolierglas entsprechend den Wünschen des Fensterherstellers direkt und ohne Zwischenschritte "zugreifbar" sein soll. Dies bedeutet jedoch nicht, dass ein bestimmtes Sortiersystem angewendet wird. Auch Absatz [0012] der DE 102 10 558 A1 lehrt nur, dass die Fächerpalette beim Entladen zunächst in ein Entlademagazin eingefahren wird und dann mit Hilfe einer Entnahmevorrichtung Isolierglas einzeln und wahlweise entnommen werden können. Irgendein Hinweis auf ein besonderes Sortierkriterium ist dem Dokument DE 102 10 558 A1 nicht als bekannt zu entnehmen.

Wenngleich sich die bekannten Verfahren und Vorrichtungen überwiegend bewährt haben, besteht Bedarf an einem verbesserten Verfahren.

Der Erfindung liegt die Aufgabe zu Grunde, das Zwischenspeichern von Isolierglas-Rohlingen zu verbessern.

Gelöst wird diese Aufgabe erfindungsgemäß mit einem Verfahren, das die Merkmale des unabhängigen Anspruches 1 aufweist.

Bevorzugte und vorteilhafte Ausgestaltungen der Erfindung sind Gegenstand der Unteransprüche.

Bei dem erfindungsgemäßen Verfahren zum Zwischenspeichern werden versiegelte Isolierglas-Rohlinge im Zwischenspeicher nach Fertigungslosen sortiert gespeichert, versiegelte Isolierglas-Rohlinge mit einheitlich breiten Abstandhaltern in einem ersten Bereich des Zwischenspeichers zwischengespeichert, versiegelte Isolierglas-Rohlinge mit von üblichen Breiten abweichend breiten Abstandhaltern in einem zweiten Bereich des Zwischenspeichers zwischengespeichert und es wird Isolierglas aus dem Zwischenspeicher nach Auftragslosen sortiert entnommen.

Der zum Ausführen des erfindungsgemäßen Verfahrens zum Zwischenspeichern von versiegelten Isolierglas-Rohlingen geeignete Zwischenspeicher zeichnet sich erfindungsgemäß durch zwei Gruppen von Speichern für versiegelte Isolierglas-Rohlinge aus.

Der zum Ausführen des erfindungsgemäßen Verfahrens verwendbare Zwischenspeicher kann sich dadurch auszeichnen, dass ein Teil bzw. die erste Gruppe des Zwischenspeichers A-Lagerböcke aufweist.

Der zum Ausführen des erfindungsgemäßen Verfahrens verwendbare Zwischenspeicher kann sich dadurch auszeichnen, dass ein weiterer Teil bzw. die zweite Gruppe des Zwischenspeichers Fächerwagen oder Fächergestelle aufweist.

Der zum Ausführen des erfindungsgemäßen Verfahrens verwendbare Zwischenspeicher kann sich dadurch auszeichnen, dass die an versiegelten Isolierglas-Rohlingen angreifenden Stützelemente der Fächerwagen oder Fächergestelle Stützelemente mit V-förmigen Ausschnitten sind.

Der zum Ausführen des erfindungsgemäßen Verfahrens verwendbare Zwischenspeicher kann sich dadurch auszeichnen, dass die Fächerwagen oder Fächergestelle quer zur Ebene der Fächer verstellbare Elemente für das Halten von versiegelten Isolierglas-Rohlingen aufweisen.

Der zum Ausführen des erfindungsgemäßen Verfahrens verwendbare Zwischenspeicher kann sich dadurch auszeichnen, dass Fachbegrenzungen zum Verbreitern von Fächern verstellbar sind.

Bei dem erfindungsgemäßen Verfahren zum Zwischenspeichern werden versiegelte Isolierglas-Rohlinge mit einheitlich breiten Abstandhaltern in einem Bereich des Zwischenspeichers, insbesondere wenigstens einem A-Lagerbock, zwischengespeichert. Versiegelte Isolierglas-Rohlinge mit von üblichen Breiten abweichend breiten Abstandhaltern werden in einem zweiten Bereich des Zwischenspeichers, insbesondere in wenigstens einem Fächerwagen, zwischengespeichert.

Im Rahmen der Erfindung ist in Betracht gezogen, in dem Zwischenspeicher, beispielsweise umfassend Lagerböcke/Fächerwagen, der einer Versiegelungsstation zugeordnet ist, versiegelte Isolierglas-Rohlinge nach Fertigungslosen sortiert, abzustellen, also versiegelte Isolierglas-Rohlinge, die beispielsweise ein und dieselbe Abmessung (Abmessungen der Glasscheiben und/oder Abmessungen des Abstandhalters zwischen den Glasscheiben) aufweisen, gemeinsam zwischenzulagern. Aus dem Zwischenspeicher mit den Fertigungslosen wird Isolierglas entnommen, um die Auftragslose zusammenzustellen.

Beispielsweise ist in einer Ausführungsform der Erfindung vorgesehen, dass die in der Versieglungsstation versiegelten Isolierglas-Rohlinge mit Hilfe eines Entnahme-Roboters, der beispielsweise mit einem Saugerfeld bestückt ist, zu dem Zwischenspeicher bewegt werden. Dabei kann der Entnahme-Roboter ein Saugerfeld aufweisen, das entweder parallel zur Förderrichtung von Isolierglas-Rohlingen in die Versiegelungsstation oder quer zu dieser Förderrichtung ausgerichtet an einem Balken beweglich ist.

Der Zwischenspeicher kann beispielsweise wenigstens zwei Gruppen von Trägern für versiegelte Isolierglas-Rohlinge aufweisen. Beispielsweise sind sogenannte A-Lagerböcke und weiters Fächerwagen vorgesehen. Dabei ist insbesondere vorgesehen, dass beim Abstapeln versiegelte Isolierglas-Rohlinge mit identischen Abstandhaltern auf A-Lagerböcken abgestellt werden und versiegelte Isolierglas-Rohlinge mit Abstandhaltern mit unterschiedlichen Breiten in wenigstens einen Fächerwagen abgestellt werden ("Fertigungslose").

Um die Auftragslose zusammenzustellen, wird dann je nach Auftrag Isolierglas aus A-Lagerböcken und aus Fächerwagen entnommen. Diese Arbeitstechnik erlaubt es, Isolierglas-Rohlinge mit zwar unterschiedlichen Abmessungen (Länge x Breite) aber identisch breiten Abstandhaltern zu versiegeln, so dass Umstellarbeiten vermieden sind. Erst wenn eine größere Menge von Isolierglas-Rohlingen mit anders breiten Abstandhaltern zu versiegeln ist, werden die Umstellarbeiten vorgenommen.

In einer Ausführungsform der Erfindung ist vorgesehen, dass die Fächerträger oder Fächergestelle Stützelemente für versiegelte Isolierglas-Rohlinge aufweisen, die V-förmig ausgebildet sind, so dass die Glasscheiben von frisch versiegelten Isolierglas-Rohlingen an den Stützelementen ausschließlich mit den äußeren Kanten ihrer Scheibenränder aufstehen bzw. anliegen.

Um das Entnehmen von Isolierglas aus dem Fächerwagen mit Hilfe von mit Saugköpfen bestückten Entnahme- und Umsetzrobotern zu erleichtern, kann vorgesehen sein, dass die Fächer durch Verstellen der Fachbegrenzungen verbreitert werden, oder es wird einfach nicht jedes Fach - z.B. nur jedes zweite Fach - mit versiegelten Isolierglas-Rohlingen beschickt.

Der Zwischenspeicher mit wenigstens einem A-Bock und wenigstens einen Fächerwagen erlaubt es, Isolierglas-Rohlinge eines Fertigungsloses ohne zeitaufwendige Umstellarbeiten der Versiegelungsstation zu versiegeln und die verschiedenen Fertigungslose dann zu Auftragslosen zusammenzuführen. Dabei ist, wie erwähnt, vorgesehen, dass der wenigstens eine im Zwischenspeicher vorgesehen A-Bock, der für versiegelte Isolierglas-Rohlinge bestimmt ist, die "normale" Breiten von Abstandhalter aufweisen, wogegen der wenigstens eine im Zwischenspeicher vorgesehene Fächerwagen für versiegelte Isolierglas-Rohlinge mit seltener vorkommenden Breiten von Abstandhaltern bestimmt ist.

Ein Entnahme-Roboter kann vorgesehen sein, der zwischen einer der Versiegelungsstation zugeordneten Lage in eine dem Zwischenspeicher zugeordnete Lage verstellbar ist.

Der Entnahme-Roboter kann durch Verschieben entlang einer Führungsschiene aus der der Versiegelungsstation zugeordneten Lage in die dem Zwischenspeicher zugeordnete Lage verstellbar sein.

Beispielsweise ist der Entnahme-Roboter um eine im wesentlichen lotrechte Achse aus der der Versiegelungsstation zugeordneten Stellung in die dem Zwischenspeicher zugeordnete Stellung schwenkbar.

Weitere Einzelheiten und Merkmale der Erfindung ergeben sich aus der nachstehenden Beschreibung von Ausführungsbeispielen an Hand der angeschlossenen Zeichnungen. Es zeigt:
- Fig. 1: schematisch in Ansicht eine erste Ausführungsform einer Vorrichtung zum Durchführen des erfindungsgemäßen Verfahrens,
- Fig. 2: eine Einzelheit im Bereich des unteren Randes eines Isolierglas-Rohlings,
- Fig. 3: schematisch und in Ansicht eine zweite Ausführungsform einer Vorrichtung zum Durchführen des erfindungsgemäßen Verfahrens,
- Fig. 4: schematisch eine Ausführungsform einer Greifer-Anordnung,
- Fig. 5: in Seitenansicht einen Greifer der Greifer-Anordnung von Fig. 4 und
- Fig. 6: in Seitenansicht einen Greifer für ein Dreifach-Stufen-Element.

Eine Vorrichtung 1 zum Versiegeln und Zwischenspeichern besitzt in der Versiegelungsstation 2 am unteren Rand eine Reihe von Rollen oder Förderbändern 4, die als Zufuhrförderer 3 für Isolierglas-Rohlinge 5 dient. Isolierglas-Rohlinge 5 werden mit Hilfe einer der Versiegelungsstation 2 vorgeschalteten Fördereinrichtung 6, beispielsweise aus einer Station zum Zusammenstellen von Isolierglas-Rohlingen 5 kommend, in die Versiegelungsstation 2 transportiert. In der Versiegelungsstation 2 wird der obere Rand des Isolierglas-Rohlings 5 von einem Rollenbalken 7 abgestützt, der in der Vorrichtung an zwei im wesentlichen lotrechten Balken 36 auf und ab verschiebbar ist. Hierzu ist ein nicht näher gezeigter motorischer Antrieb vorgesehen. Der Rollenbalken 7 ist mit einer Reihe von, beispielsweise topfförmigen, Rollen 8 bestückt, über die der Rollenbalken 7 den Isolierglas-Rohling 5 durch Anliegen an die ihm zugekehrte Glasscheibe des Isolierglas-Rohlings 5 so abstützt, dass der obere Rand des Isolierglas-Rohlings 5 frei zugänglich ist.

Auf dem Zuführförderer 3 aufstehend werden Isolierglas-Rohlinge 5 in eine Stellung gebracht, in der sie der Versiegelungsanordnung 10 in der Versiegelungsstation 1 zugeordnet sind.

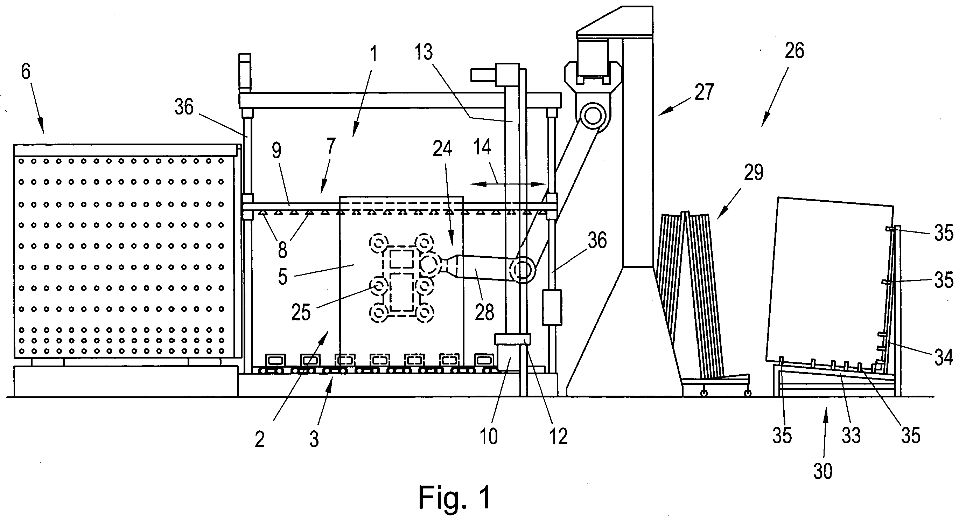

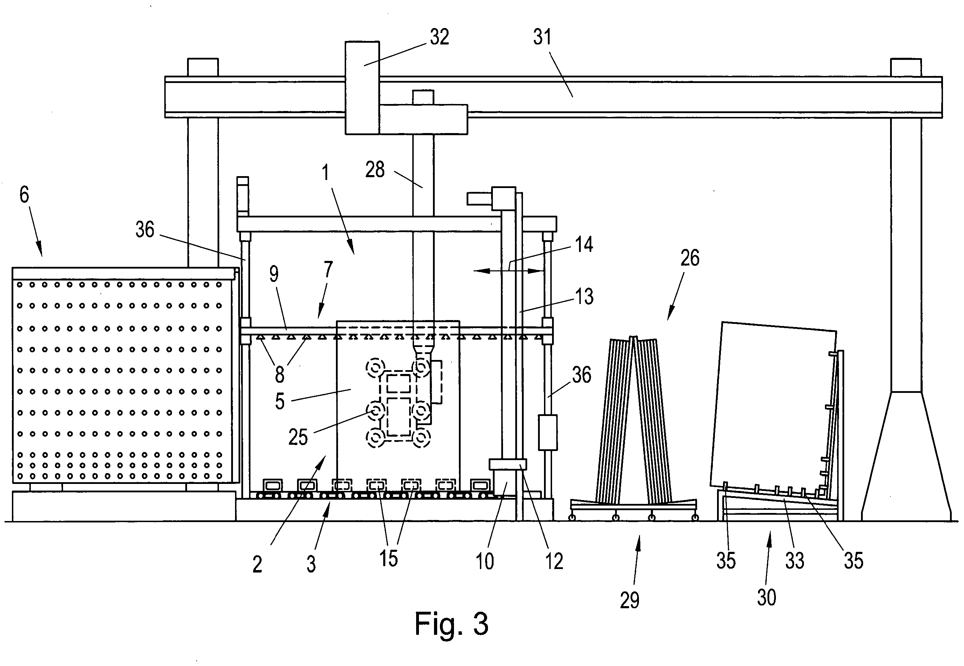

Die Versiegelungsanordnung 10 besteht im Beispiel aus einer Versiegelungsdüse 11, die über einen Schlitten 12 an einem Führungsbalken 13 auf und ab verschiebbar geführt und um eine zur Ebene des Isolierglas-Rohlings 5 normale Achse schwenkbar (drehbar) ist. Der Führungsbalken 13 selbst ist in einer zum Isolierglas-Rohling 5 parallelen Ebene horizontal verstellbar, wie dies durch Pfeile 14 in Fig. 1 und 3 angedeutet ist. So kann die Versiegelungsdüse 11 rings um den Rand eines (stillstehenden) Isolierglas-Rohlings 5 fahren, um alle (vier) Abschnitte der Randfuge mit Versiegelungsmasse zu füllen.

Es ist bevorzugt, dass nur die Versiegelungsanordnung 10 bewegt wird, wenn die Versiegelungsdüse 11 den gesamten Umfang eines Isolierglas-Rohlings 5 abfährt. In bestimmten Fällen, insbesondere bei Sonderformen, kann eine Bewegung der Versiegelungsanordnung 10 ("Versiegelungskopf") entlang des Führungsbalkens 13 mit einer Bewegung des Führungsbalkens 13 in horizontaler Richtung (Pfeil) kombiniert sein. So können Sonderformen von Isolierglas-Rohlingen 5 (schiefe und/oder gekrümmte Randabschnitte der Isolierglas-Rohlinge 5) versiegelt werden. Es ist aber auch in Betracht gezogen, an Stelle der Bewegungen der Versiegelungsdüse 11 allein (Bewegungen der Versiegelungsdüse 11 auf und ab für das Versiegeln der im Wesentlichen lotrechten Ränder des Isolierglas-Rohlings 5 und horizontale Bewegungen der Versiegelungsdüse 11 für das Versiegeln der im Wesentlichen horizontalen Ränder des Isolierglas-Rohlings 5) eine Kombination von Bewegungen der Versiegelungsdüse 5(im Wesentlichen lotrecht auf und ab für im Wesentlichen lotrechte Ränder des Isolierglas-Rohlings 5) mit horizontalen Bewegungen des Isolierglas-Rohlings 5 bei stillstehender Versiegelungsdüse 11 (für die horizontalen Ränder des Isolierglas-Rohlings 5) auszuführen.

Wenn Sonderformen (von der rechteckigen/quadratischen Umrissform abweichende Umrissformen von Isolierglas-Rohlingen 5) zu versiegeln sind, können auch gleichzeitig Bewegungen der Versiegelungsdüse 11 und des Isolierglas-Rohlings 5 ausgeführt werden.

Die Versieglungsstation 2 ist nicht auf "Ein-Düsen"-Vorrichtungen beschränkt. Vielmehr können auch Versiegelungsanordnungen 10 mit zwei Versiegelungsdüsen 11 verwendet werden. Trotzdem sind "Ein-Düsen"-Versiegelungsanordnungen 10 bevorzugt.

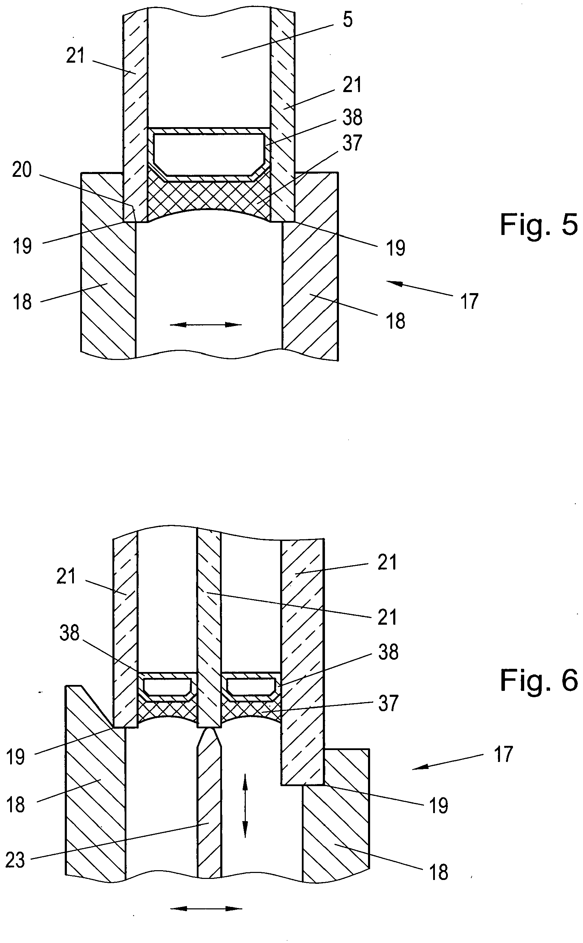

Um das Versiegeln ausführen zu können, wird in einer Ausführungsform der in die Versiegelungsstation 2 transportierte Isolierglas-Rohling 5 in der Versieglungsstation 2 an seiner der Versiegelungsdüse 11 gegenüberliegenden Seite von Saugern 15 erfasst, und die Fördermittel des Zuführförderers 3 vom Isolierglas-Rohling 5 entfernt, insbesondere die Förderbänder 4, am unteren Rand des Isolierglas-Rohlings 5, insbesondere nach hinten, zurückgezogen, und gegebenenfalls der Rollenbalken 7 nach oben aus dem Bereich des Isolierglas-Rohlings 5 wegbewegt. In einer alternativen, gegebenenfalls aber zusammen mit den zuvor erwähnten Saugern 15 verwirklichten Ausführungsform werden, um den Isolierglas-Rohling 5 sicher zu halten, dessen unterem Rand, diesen abstützende Greifer-Anordnungen 16 zugeordnet. Die Greifer 17 der Greifer-Anordnungen 16 sind dem unteren Rand des Isolierglas-Rohlings 5 zugeordnet und erfassen dessen unteren Rand durch Klemmen mit Hilfe von Backen 18. Dabei kann vorgesehen sein, dass die Greifer 17 und deren Backen 18 bzw. Abstützglieder Spitzen oder Kanten aufweisen, so dass eine im Wesentlichen nur punkt- bzw. linienförmige Berührung des Außenrandes der Glasscheiben des Isolierglas-Rohlings 5 gegeben ist. Insbesondere sind die Backen 18 der Greifer 17, die geöffnet und geschlossen, d.h. an einen Isolierglas-Rohling 5 angelegt werden können, so ausgebildet, dass sie nur im Bereich der äußeren Kante 19 des Randes 20 der Glasscheiben 21 eines Isolierglas-Rohlings 5 angreifen (Fig. 5 und 6).

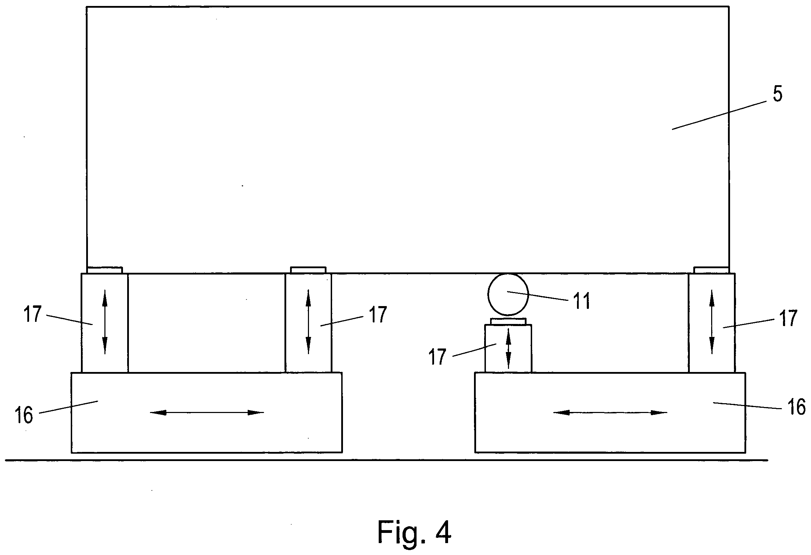

Bei dem in Fig. 4, 5 und 6 gezeigten Beispiel für eine Greifer-Anordnung 16 sind je zwei oder mehr als zwei Greifer 17 an einem gemeinsamen Träger 22 angeordnet. Jeder Greifer 17 trägt an seinem oberen Ende eine Klemme mit zwei Backen 18, mit welcher der Greifer 17 einen Isolierglas-Rohling 5 an seinem unteren Rand erfasst und klemmend festhält. So wird ein in die Versiegelungsstation 2 transportierter Isolierglas-Rohling 5 nach dem Entfernen des unteren Zuführförderers 3, umfassend Förderbänder 4, in der Versieglungsstation 2 während des Versiegelns von der wenigstens einen Greifer-Anordnung 16, gegebenenfalls gemeinsam mit den Saugköpfen 15 gehalten.

Jeder der Greifer 17 ist aus seiner Wirkstellung absenkbar, so dass, wie in Fig. 4 gezeigt, die Greifer 17 die Bewegung der Versieglungsdüse 11 während des Versiegelns des unteren (horizontalen) Randabschnittes der Randfuge des Isolierglas-Rohlings 5 nicht behindern. Wie erwähnt, wird die Bewegung der Düse 11 entlang des unteren horizontalen Abschnittes der Randfuge eines Isolierglas-Rohlings 5 insbesondere durch alleiniges Bewegen der Versiegelungsanordnung 10 (Bewegen des Führungsbalkens 13 in Richtung des Pfeiles 14) erreicht.

Wenn ein von der Greifer-Anordnung 16 erfasster und von Greifern 17 klemmend festgehaltener Isolierglas-Rohling 5 horizontal zu bewegen ist, kann dies durch Bewegen der Greifer-Anordnung 16 oder der Greifer-Anordnungen 16, wenn zwei oder mehr als zwei Greifer-Anordnungen 16 vorgesehen sind, bewirkt werden.

Die dem unteren Rand des Isolierglas-Rohlings 5 zugeordneten Teile (Backen 18) der Greifer 17 sind beispielsweise durch Spitzen oder Schneiden so ausgebildet, dass sie an den Glasscheiben 21 des Isolierglas-Rohlings 5 nur punkt- oder linienförmig angreifen. Dabei ist auch in Betracht gezogen, dass die Greifer 17 nur an einer der zwei oder drei Glasscheiben 21 des Isolierglas-Rohlings 5 von unten her, den Isolierglas-Rohling 5 abstützend anliegen. Dies ist vor allem bei Isolierglas-Rohlingen 5 für Stufen-Isolierglas von Vorteil und gilt insbesondere für den mittleren Stützfinger 23 der Ausführungsform eines Greifers 17 von Fig. 6.

Die Möglichkeit, die wenigstens eine Greifer-Anordnung 16 horizontal zu verstellen, erlaubt es auch, die wenigstens eine Greifer-Anordnung 16 gegenüber dem Isolierglas-Rohling 5, beispielsweise im Bereich von wenigstens einer seiner unteren Ecken, auszurichten.

Wenn die Versiegelungsdüse 11 die Randfuge im Bereich des unteren, horizontalen Randes des Isolierglas-Rohlings 5 mit Versiegelungsmasse füllt (versiegelt), werden die Greifer 17 einer nach dem anderen wegbewegt, z.B. nach unten abgesenkt, so dass die Versiegelungsdüse 11 am unteren Rand des Isolierglas-Rohlings 5 entlang fahren kann. Dies ist für eine Versiegelungsdüse 11 (schematisch dargestellt) in Fig. 4 gezeigt.

Sobald alle Randfugenabschnitte des Isolierglas-Rohlings 5 mit Versiegelungsmasse gefüllt (versiegelt) worden sind, wird der versiegelte Isolierglas-Rohling von dem Entnahme-Roboter 24, der mit Saugern 25 bestückt ist, zu einem Zwischenspeicher 26 bewegt. In diesem Zwischenspeicher 26 werden versiegelte Isolierglas-Rohlinge 5 nach Fertigungslosen sortiert abgestellt. Isolierglas wird aus dem Zwischenspeicher 26 nach Auftragslosen sortiert entnommen.

Die einen Isolierglas-Rohling 5 während des Versiegelns in der Versiegelungsstation 2 haltenden Sauger 15 sind unter die Förderebene des Zuführförderers 3 absenkbar, damit ein versiegelter Isolierglas-Rohling 5 vom Entnahme-Roboter 24 einfach nach hinten entnommen werden kann.

Ebenso sind die Fördermittel des Zuführförderers 3, z.B. die Rollen oder Förderbänder 4, auf welchen aufstehend ein Isolierglas-Rohling 5 in die Versiegelungsstation 2 gefördert wird, absenkbar, um einerseits das Versiegeln und anderseits das Entnehmen von versiegelten Isolierglas-Rohlingen 5 aus der Versiegelungsstation 2 mit Hilfe des Entnahme-Roboters 24 nicht zu behindern.

Wenn ein Isolierglas-Rohling 5 fertig versiegelt ist, wird zunächst das Feld mit Saugern 25 des Entnahme-Roboters 24 in Stellung gebracht und an den Isolierglas-Rohling 5 angelegt. Dann werden die Sauger 15 und/oder die Greiferanordnung 16 vom unteren Rand des versiegelten Isolierglas-Rohlinges 5 gelöst und abgesenkt, der Rollenbalken 7 angehoben, so dass der versiegelte Isolierglas-Rohling 5 nun ausschließlich vom Feld mit Saugern 25 des Entnahme-Roboters 24 gehalten wird. Der Entnahme-Roboter 24 entnimmt versiegelte Isolierglas-Rohlinge 5 nach hinten, d.h. auf die der Versiegelungsanordnung 10 gegenüberliegende Seite, und bewegt versiegelte Isolierglas-Rohlinge 5 zu dem Zwischenspeicher 26, wo es abgestellt (abgestapelt) wird.

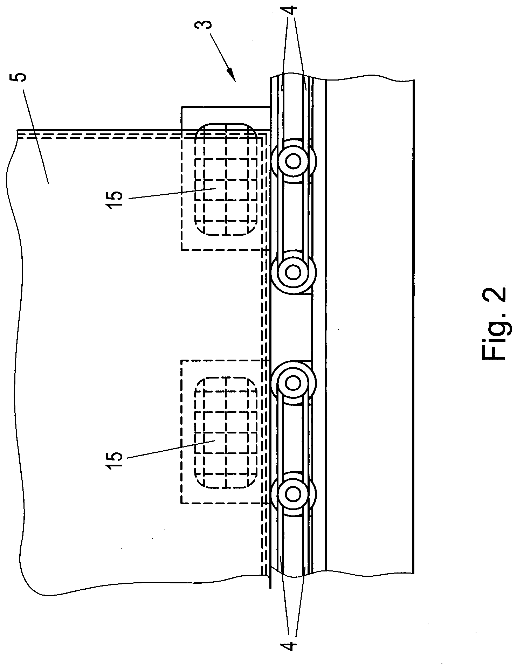

Der Entnahme-Roboter 24 der in Fig. 1 gezeigten Ausführungsform besitzt ein Feld mit Saugern 25, das an einem Turm 27 um eine lotrechte Achse aus einer der Versiegelungsstation 2 zugeordneten Stellung in eine dem Zwischenspeicher 26 zugeordnete Stellung schwenkbar angeordnet ist. Dabei ist das Feld mit Saugern 25 über einen, mehrere miteinander gelenkig verbundene Abschnitte aufweisenden Arm 28 am Turm 27 gelagert. Fig. 2 zeigt auch, dass der Arm 28 des Entnahme-Roboters 24, an dem das Feld mit den Saugern 25 montiert ist, um mehrere Achsen beweglich ist, um die Bewegungen beim Entnehmen von versiegelten Isolierglas-Rohlingen 5 aus der Versiegelungsstation 2 und beim Abstapeln in den Zwischenspeicher 26 mit dem wenigstens einen A-Lagerbock 29 und dem wenigstens einen Fächerwagen 30 ausführen zu können.

Bei der in Fig. 3 gezeigten Ausführungsform, die in ihrem grundsätzlichen Aufbau der Ausführungsform von Fig. 1 und 2 entspricht, ist ein Balken 31 vorgesehen, an dem der Entnahme-Roboter 24 zum Entnehmen von versiegelten Isolierglas-Rohlingen 5 und zum Bewegen desselben zum Zwischenspeicher 26 verschiebbar geführt ist. Der Balken 31 ist parallel zur Förderebene (parallel zur Bildebene der Fig. 2) ausgerichtet. Bei der Ausführungsform von Fig. 3 ist das Feld mit den Saugern 25 des Entnahme-Roboters 24 über einen Arm 28 an einem Schlitten 32 befestigt, der entlang des horizontalen Balkens 31 aus einer der Versiegelungsstation 2 zugeordneten Stellung (Fig. 3) in eine dem Zwischenspeicher 26 zugeordnete Stellung verfahrbar ist. So können in der Versiegelungsstation 2 versiegelte Isolierglas-Rohlinge 5 mit Hilfe des Entnahme-Roboters 24 aus der Versiegelungsstation 2 entnommen werden und im Zwischenspeicher 26 abgestellt ("abgestapelt") werden.

Der Zwischenspeicher 26 besitzt im gezeigten Ausführungsbeispiel je wenigstens einen "A-Lagerbock" 29 und einen "Fächerwagen" 30, wobei vorgesehen ist, dass versiegelte Isolierglas-Rohlinge 5 mit Abstandhaltern mit üblicher bzw. häufig vorkommender Breite auf dem wenigstens einen A-Lagerbock 29 abgestellt wird. Versiegelte Isolierglas-Rohlinge 5 mit seltener vorkommenden Breiten von Abstandhaltern wird in dem wenigstens einen Fächerwagen 30 abgestellt. In dem Fächerwagen 30 sind an zueinander im Winkel ausgerichteten Armen 33, 34 Stützelemente 35 vorgesehen, die V-förmig ausgeschnittene, dem Rand von versiegelten Isolierglas-Rohlingen 5 zugekehrte Enden aufweisen, so dass versiegelte Isolierglas-Rohlinge 5 im Fächerwagen 30 ausschließlich durch Angriff an den äußeren Kanten 19 der Ränder 20 der Glasscheiben 21 von versiegelten Isolierglas-Rohlingen 5 abgestützt wird und die außerhalb der Abstandhalter 38 eingebrachte Versiegelungsmasse 37 nicht berührt wird.

So besteht die Möglichkeit, im Zwischenspeicher 26 versiegelte Isolierglas-Rohlinge 5 nach Fertigungslosen sortiert abzustellen und dann Isolierglas aus dem Zwischenspeicher 26 nach Auftragslosen zusammengestellt zu entnehmen.

Zusammenfassend kann ein Ausführungsbeispiel der Erfindung wie folgt beschrieben werden:
Beim Versiegeln werden Isolierglas-Rohlinge 5 in einer Versiegelungsstation 2 unten klemmend durch Greifer 17 einer Greifer-Anordnung 16 und/oder durch Saugköpfe 15 gehalten und liegen oben an einem mit Rollen 8 bestückten Rollenbalken 7 an. Beim Versiegeln von Isolierglas-Rohlingen 5 bewegt sich nur die Düse 11 einer Versiegelungsanordnung 10 entlang des Außenrandes des Isolierglas-Rohlings 5, der während des Versiegelns stillsteht. Wenn der untere Rand eines Isolierglas-Rohlings 5 versiegelt wird, werden am unteren Rand angreifende Greifer 17 gelöst und nach unten wegbewegt. Versiegelte Isolierglas-Rohlinge 5 wird von einem Entnahme-Roboter 24 aus der Versiegelungsstation 2 auf die der Versiegelungsanordnung 10 gegenüberliegenden Seite hin entnommen, zu einem Zwischenspeicher 26 bewegt und in diesem auf A-Lagerböcken 29 und Fächergestellen 30 nach Fertigungslosen sortiert abgestellt.

## Patentansprüche

1. Verfahren zum Zwischenspeichern von versiegelten Isolierglas-Rohlingen (5), bei dem versiegelte Isolierglas-Rohlinge (5) aus einer Versiegelungsstation (2) entnommen und in einen Zwischenspeicher (26) abgestellt werden, wobei versiegelte Isolierglas-Rohlinge (5) im Zwischenspeicher (26) nach Fertigungslosen sortiert gespeichert werden, wobei Isolierglas aus dem Zwischenspeicher (26) nach Auftragslosen sortiert entnommen wird,
**dadurch gekennzeichnet, dass** versiegelte Isolierglas-Rohlinge (5) mit einheitlich breiten Abstandhaltern (38) in einem ersten Bereich des Zwischenspeichers (26) zwischengespeichert werden, dass versiegelte Isolierglas-Rohlinge (5) mit von üblichen Breiten abweichend breiten Abstandhaltern (38) in einem zweiten Bereich des Zwischenspeichers (26) zwischengespeichert werden.

2. Verfahren nach Anspruch 1, **dadurch gekennzeichnet, dass** als erster Bereich des Zwischenspeichers (26) wenigstens ein A-Lagerbock (29) verwendet wird.

3. Verfahren nach Anspruch 1 oder 2, **dadurch gekennzeichnet, dass** als zweiter Bereich des Zwischenspeichers (26) wenigstens ein Fächerwagen oder ein Fächergestell (30) verwendet wird.

4. Verfahren nach einem der Ansprüche 1 bis 3, **dadurch gekennzeichnet, dass** nur jedes zweite Fach des Zwischenspeichers (30) mit Isolierglas-Rohlingen (5) beschickt wird.

## Claims

1. Method for intermediate storage of sealed insulating glass blanks (5), in which sealed insulating glass blanks (5) are removed from a sealing station (2) and are placed in an intermediate storage unit (26), wherein sealed insulating glass blanks (5) are stored in the intermediate storage unit (26) in a manner sorted according to production lots, wherein insulating glass is removed from the intermediate storage unit (26) in a manner sorted according to order lots, **characterized in that** sealed insulating glass blanks (5) are intermediately stored with spacers (38) having a uniform width in a first area of the intermediate storage unit (26), and **in that** sealed insulating glass blanks (5) are intermediately stored with spacers (38) having widths deviating from usual widths in a second area of the intermediate storage unit (26).

2. Method according to claim 1, **characterized in that** at least one A-frame storage support (29) is used as the first area of the intermediate storage unit (26).

3. Method according to claim 1 or 2, **characterized in that** at least one compartment rack or one compartment frame (30) is used as the second area of the intermediate storage unit (26) .

4. Method according to one of claims 1 to 3, **characterized in that** only every other compartment of the intermediate storage unit (30) is loaded with insulating glass blanks (5) .

## Revendications

1. Procédé pour l'entreposage d'ébauches de vitrage isolant scellées (5), dans lequel des ébauches de vitrage isolant scellées (5) sont retirées d'un poste de scellement (2) et déposées dans un magasin d'entreposage (26), les ébauches de vitrage isolant scellées (5) étant entreposées après un tri par lots de fabrication dans le magasin d'entreposage (26), le vitrage isolant étant prélevé dans le magasin d'entreposage (26) avec un tri par lot de commande, **caractérisé en ce que** des ébauches de vitrage isolant scellées (5) sont entreposées avec des cales
d'écartement (38) de largeur uniforme dans une première zone du magasin d'entreposage (26) et **en ce que** des ébauches de vitrage isolant scellées (5) sont entreposées avec des cales d'écartement (38) d'une largeur différente des largeurs habituelles dans une deuxième zone du magasin d'entreposage (26).

2. Procédé selon la revendication 1, **caractérisé en ce qu'**au moins un bloc d'appui en A (29) est utilisé comme première zone du magasin d'entreposage (26).

3. Procédé selon la revendication 1 ou 2, **caractérisé en ce qu'**au moins un chariot à compartiments ou un bâti à compartiments (30) est utilisé comme deuxième zone du magasin d'entreposage (26).

4. Procédé selon l'une des revendications 1 à 3, **caractérisé en ce que** seulement un compartiment sur deux du magasin d'entreposage (30) est garni avec des ébauches de vitrage isolant scellées (5).
